Europäisches Patentamt

European Patent Office

Office européen des brevets

(19)

(11) Publication number: **0 248 640 B1**

(12) **EUROPEAN PATENT SPECIFICATION**

(45) Date of publication of patent specification: **04.09.91**

(51) Int. Cl.5: **F02G 5/02, F02B 63/06, F04B 35/00**

(21) Application number: **87304880.5**

(22) Date of filing: **02.06.87**

(54) Method and apparatus for producing high-temperature high-pressure gas.

(30) Priority: **02.06.86 JP 127674/86**

(43) Date of publication of application:
**09.12.87 Bulletin 87/50**

(45) Publication of the grant of the patent:
**04.09.91 Bulletin 91/36**

(84) Designated Contracting States:
**BE DE FR GB IT NL SE**

(56) References cited:
**CA-A- 1 146 361      DE-A- 2 753 716**
**DE-A- 3 150 148      DE-A- 3 403 595**
**FR-A- 2 406 104      US-A- 2 090 214**
**US-A- 2 208 157      US-A- 4 238 175**
**US-A- 4 357 379**

**PATENT ABSTRACTS OF JAPAN, vol. 6, no. 196 (M-161)[1074], 5th October 1982; & JP-A-57 102 542 (MITSUBISHI JUKOGYO K.K.) 25-06-1982**

**PATENT ABSTRACTS OF JAPAN, vol. 9, no. 294 (M-431)[2017], 20th November 1985; & JP-A-60 132 016 (MORIYOSHI KIKUMOTO) 13-07-1985**

(73) Proprietor: **TONEN SEKIYUKAGAKU K.K.**
**1-1, Tsukiji, 4-Chome**
**Chuo-Ku Tokyo 104(JP)**

(72) Inventor: **Shimada, Shuji**
**1647-7, Ishikawa**
**Fujisawa-shi Kanagawa-ken(JP)**
Inventor: **Ueno, Mineo**
**17-16, Sakaigi Honcho Hodogaya-ku**
**Yokohama-shi Kanagawa-ken(JP)**
Inventor: **Suzuki, Makoto**
**15-15, Tanaka 1-chome Isogo-ku**
**Yokohama-shi Kanagawa-ken(JP)**

(74) Representative: **Dew, Melvyn John et al**
**Exxon Chemical Limited Exxon Chemical Technology Centre P.O. Box 1**
**Abingdon Oxfordshire, OX13 6BB(GB)**

## Description

The present invention relates to a method and apparatus for producing a high-temperature, high-pressure gas efficiently and economically.

High-temperature, high-pressure gases are used in various fields of chemical industry. One example is in the processing of plastics. In the production of nonwoven fabric from polyethylene or polypropylene by melt blow process, a high-temperature, high-pressure air is used to blow out a molten resin and disperse and stretch it into fibers. Since this air is intended to stretch the molten resin emerging from the nozzle orifice, it is required to have a sufficiently high temperature and pressure. However, an air at an excessively high temperature is not only deleterious to the resin but also uneconomical. Also, an air under an excessively high pressure breaks the stretched fibers and wastes energy. For this reason, it is necessary to properly control the temperature and pressure of the high-temperature, high-pressure gas if the melt blow process is to be performed economically under the optimum conditions.

Furthermore, high-pressure, high-temperature gases are commonly used for the purging and regeneration of catalysts and absorbents. They are also used for the heating and drying of industrial products. There are many instances where a reaction gas itself undergoes compression and preheating before it is introduced into a reactor.

The production of such high-temperature, high-pressure gases involves the adiabatic compression or polytropic compression of a gas by a compressor and the heating of a compressed gas, which has become hot as the result of compression, with a heating furnace or sheath heater. In general, gases rise in temperature upon adiabatic compression or polytropic compression; however, the temperature is too low for the above-mentioned applications, and they need additional heating by a heating furnace or electric heater.

It is not desirable to heat the compressed gas emerging from a compressor to a desired temperature by means of a heating furnace; it needs expensive equipment and impairs the safety measure. Heating by a sheath is safe but adds to production cost.

Accordingly, it is desirable to provide a method and apparatus for producing a high-temperature, high-pressure gas safely and economically without the above mentioned drawbacks.

US-A-2090214 discloses a method for producing a compressed gas at a high temperature, which comprises the steps of

- driving a compressor by means of an internal combustion engine and
- passing the gas discharged from said compressor in heat-exchange relationship with the exhaust gas from said internal combustion engine. The objective here is to recover and use the energy contained in high temperature exhaust gases. There is no temperature sensing arrangement which provides a signal for controlling a valve so as to keep the exhaust temperature constant.

The present invention derives from findings that it is possible to obtain a high-temperature, high-pressure gas efficiently by using an internal combustion engine as a prime mover for a compressor and utilizing the heat of the exhaust gas by means of a heat exchanger. Thus according to the present invention there is provided a method for producing a compressed gas at a high temperature, which comprises the steps of

- driving a compressor by means of an internal combustion engine and
- passing the gas discharged from said compressor in heat-exchange relationship with the exhaust gas from said internal combustion engine characterised in that the method further includes the steps of
- measuring the temperature of the high-temperature, high pressure gas discharged from the heat exchanger,
- producing a control signal on the basis of the measured temperature and
- operating a flow control valve in dependence on said control signal to adjust the relative amount of the exhaust gas or of the compressed gas entering the heat exchanger such as to maintain said compressed gas at a predetermined temperature.

Another aspect of the invention provides an apparatus for producing a high-temperature, high-pressure gas which comprises :

(a) a compressor (1)

(b) an internal combustion engine (2) adapted to drive the compressor

(c) a heat exchanger (4)

(d) an intermediate pipe (5) for conducting compressor gas discharged from the compressor into the heat exchanger.

(e) outlet pipe means (6) for conducting high-pressure gas emerging from the heat exchanger, and

(f) an exhaust pipe (7) for conducting the exhaust gas from the internal combustion engine into the heat exchanger

(g) the heat exchanger including means for the exhaust gas and compressor gas to pass in heat exchange relationship whereby the exhaust gas heats the compressor gas characterised in that there is provided

- a means (11) for measuring the temperature of the gas discharged from the heat-exchanger (4)

- a means for producing a control signal on the basis of the measured temperature; and
- a flow control valve (9) operable in dependance on the control signal to adjust the relative amount of the exhaust gas or of the compress or gas entering the heat exchanger such as to maintain said compressor gas at a predetermined temperature.

Upon adiabatic compression or polytropic compression by a compressor, the compressed gas rises in temperature to some extent. However, there is an instance where the compressed gas emerging from the compressor is not sufficiently high in temperature. The compressed gas can be heated without a special heating energy if the prime mover for the compressor is an internal combustion engine which emits a high-temperature exhaust gas and heat exchange is performed between the compressed gas and the exhaust gas.

The present invention provides a method and apparatus for producing a high-temperature, high-pressure gas at 200-500°C and 2-20 kg/cm²G in a stable manner.

The compressed gas emerging from a compressor is heated by heat exchange with the exhaust gas emitted from an internal combustion engine to drive the compressor. To obtain the high-temperature gas at 200-500°C according to the present invention, it is necessary that (1) the internal combustion engine should be one which emits an exhaust gas of high temperature and (2) the compressor should generate a compressed gas having as high a temperature as possible.

The first condition may be satisfied by using a known internal combustion engine. The one which emits an exhaust gas higher than 300°C, especially 400-500°C, is preferable. A preferred example is a diesel engine. Heating the exhaust gas further is also within the scope of the invention. It is accomplished by, for example, adding a combustion improver to the exhaust gas containing residual air or using a catalyst to remove $NO_x$ in the exhaust gas.

The second condition is contrary to the requirement for conventional compressors, i.e., it is important to minimize the temperature rise of compressed gas for the reduction of power cost and the increase of compressor efficiency. This is not desirable for the production of a high-temperature, high-pressure gas, whichis the technical subject of the present invention. Nevertheless, the present inventors succeeded in achieving the object of the invention even by using a known compressor.

The temperature of compressed gas at the outlet of a compressor is related to the adiabatic efficiency of compression ($n_{ad}$) and the polytropic efficiency ($n_p$) as shown in the following equations.

(Refer to "High-pressure Technology Handbook", pp. 347-349, by Asakura Shoten, 1965.)

$$n_{ad} = \frac{T_1\left\{\left(\frac{P_2}{P_1}\right)^{\frac{\kappa-1}{\kappa}} - 1\right\}}{T_2' - T_1}$$

$$n_p = \frac{\frac{\kappa-1}{\kappa}\ln\frac{P_2}{P_1}}{\ln\frac{T_2}{T_1}}$$

$$\frac{T_2'}{T_1} = \left(\frac{P_2}{P_1}\right)^{\frac{1}{n_p}\cdot\frac{\kappa-1}{\kappa}}$$

where,

$T_1$ = inlet temperature

$T_2$ = theoretical outlet temperature (adiabatic reversible compression)

$T_2'$ = actual outlet temperature

$P_1$ = inlet pressure (absolute pressure)

$P_2$ = outlet pressure (absolute pressure)

k = adiabatic constant ($C_p/C_v$)

According to the present invention, the high-temperature, high-pressure gas at 200-500 C is preferably obtained by heat exchange with the exhaust gas from a driving engine in the case of a compressed gas having an adiabatic constant alpha (= $C_p/C_v$) greater than 1.3. Examples of such a gas include air, oxygen, nitrogen, carbon monoxide, hydrogen, and helium, and mixtures of any of these. The inlet temperature is usually at normal temperature; but it is not specifically limited, though preferably it is higher than -5°C.

The compression of a gas is preferably performed such that the compressed gas has a pressure of 2 to 20 kg/cm²G. To this end, compression is usually performed in one to two stages, and the compression ratio $P_2/P_1$ (ratio of absolute pressure) of each stage should preferably be in the range of 3 to 6. In the case of two-stage compression, the compressed gas emerging from the first stage may be cooled prior to recompression because of the limitation in heat resistance of the compressor. This is also within the scope of the invention. According to the present invention, it is possible to use a compressor having an adiabatic efficiency ($n_{ab}$)

lower than 80%, usually 50-75%. The present invention does not preclude using compressors having an adiabatic efficiency lower than 50%.

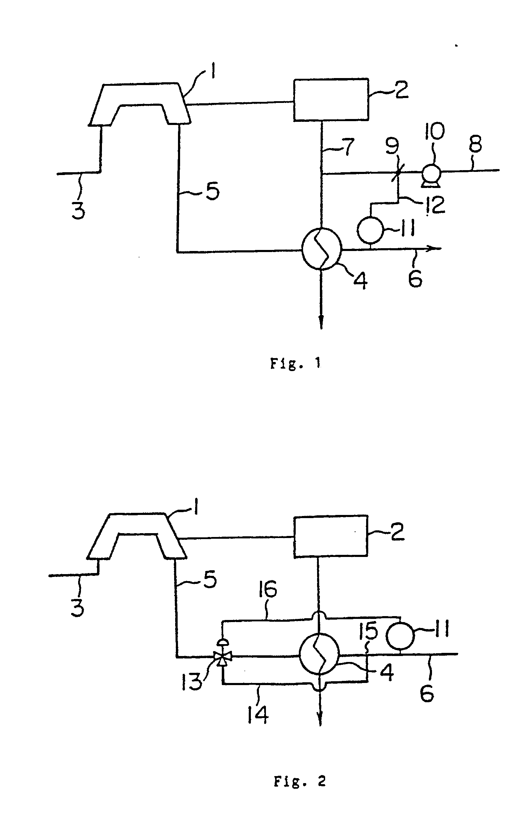

In the accompanying drawings : Figure 1 is a schematic drawing for producing a high temperature, high pressure gas according to an embodiment of the invention; Figure 2 is a schematic drawing showing an apparatus producing a high temperature, high pressure has according to another embodiment of the invention.

A preferred embodiment of the present invention is described with reference to Fig. 1.

Compressor 1 is connected to internal combustion engine 2 via a proper driving means. To the entrance of compressor 1 is connected inlet pipe 3, and to the exit of the compressor is connected intermediate pipe 5 to introduce the compressed gas into heat exchanger 4. Intermediate pipe 5 passes through heat exchanger 4 and connects to outlet pipe 6. To internal combustion engine 2 is connected exhaust pipe 7, which passes through heat exchanger 4. In the middle of exhaust pipe 7, there is attached diverting pipe 8. In the middle of diverting pipe 8, there are attached flow control valve 9 and blower 10. Outlet pipe 6 at the downstream of heat exchanger 4 is provided with temperature detector 11. The output signals from temperature detector 11 are sent to flow control valve 9 through line 12.

When internal combustion engine 2 runs, compressor 1 is driven, and compressor 1 sucks a gas through inlet pipe 3 and delivers a compressed gas to the intermediate pipe. The compressed gas is hot on account of adiabatic compression or polytropic compression. The compressed gas subsequently enters heat exchanger 4 through which exhaust pipe 7 of internal combustion engine 2 passes. Thus the compressed gas is heated through heat exchange. The heated compressed gas is discharged from outlet pipe 6 for the subsequent processes.

The thus obtained high-temperature, high-pressure gas undergoes temperature control so that it has a desired temperature. This is accomplished by the temperature control mechanism consisting of temperature detector 11, diverting pipe 8, and flow control valve 9 of blower 10. Temperature detector 11 detects the temperature of the gas in outlet pipe 6 and transmits a signal to flow control valve 9 through line 12, said signal being based on the difference between the detected temperature and the desired temperature. Flow control valve 9 controls the amount of the exhaust gas passing through diverting pipe 8. If the gas being discharged through output pipe 6 is excessively high in temperature, flow control valve 9 opens more, allowing the exhaust gas to pass more through diverting pipe 8 and consequently reducing the amount of the exhaust gas that passes through heat exchanger 4. As the result, the high-temperature, high-pressure gas being discharged from outlet pipe 6 reduces in temperature. Conversely, if the gas being discharged from outlet pipe 6 is excessively low in temperature, the above-mentioned operation is performed in reverse. In this manner, the high-temperature, high-pressure gas emerging from the outlet pipe is kept at a constant temperature at all times.

In this example, compressor 1 preferably is of such a type that produces a compressed gas having a comparatively high temperature. A preferred example is a screw compressor having a compression ratio of 3 to 6. The compressor preferably has an adiabatic efficiency lower than 80%. Compressor 1 may be used in multiple stage depending on the pressure at the outlet. Usually, it is used in a single stage. In such a case, the resulting compressed gas preferably has a pressure of about 2 to 5 $kg/cm^2G$. This pressure is particularly effective for the melt blow process. In the meantime, the compressor may be provided with a pressure controller for an anomalous pressure rise which might occur due to the clogging of outlet pipe 6. An example of such device is formed by providing a recycling passage across inlet pipe 3 and intermediate pipe 5. The recycling passage is provided with a valve which opens when the pressure in intermediate pipe 5 rises anomalously, so that the gas in intermediate pipe 5 is returned to inlet pipe 3.

The internal combustion engine should be one which emits a high-temperature exhaust gas. For this reason, a diesel engine is preferable. The temperature of the exhaust gas from a diesel engine is usually from 300 to 500°C, preferably from 400 to 500°C.

Heat exchanger 4 may be of any type. A shell-and-tube heat exchanger is preferable. In this case, the exhaust gas from the engine is preferably passed through the tubes which are easy to clean.

Flow control valve 9 attached to diverting pipe 8 may be the suction damper valve of blower 10. Blower 10 is used for the effective introduction of the exhaust gas into the diverting pipe. The flow rate in diverting pipe 8 can be adjusted by flow control valve 9 such as suction damper valve, which makes it possible to control the amount of the exhaust gas that is used for heat exchange in the heat exchanger. Thus it is possible to control the temperature of the high-temperature, high-pressure gas emerging from the outlet pipe. Temperature detector 11 to send control signals to flow control valve 9 may be of any type. It calculates the difference between the detected temperature and the desired temperature and issues a control signal to eliminate the difference.

Fig. 2 shows another embodiment of the present invention. Like reference numerals designate like parts in both Fig. 1 and Fig. 2.

In the apparatus shown in Fig. 2, intermediate pipe 5 is provided with diverting valve 13, to which is connected bypass pipe 14. Bypass pipe 14 bypasses heat exchanger 4 and joins outlet pipe 6. Temperature detector 11 is attached to outlet pipe 6 at the downstream of confluent point 15. Temperature detector 11 is connected to diverter valve 13 via signal line 16.

When the gas in the outlet pipe is excessively high in temperature, the control signal from temperature detector 11 is transmitted to diverter valve 13 through signal line 16. The control signal actuates diverter valve 13 so that the flow rate of bypass pipe 14 increases. As a result, the amount of the compressed gas which bypasses heat exchanger 4 and enters the outlet pipe increases and consequently the gas in the outlet pipe reduces in temperature. When the outlet temperature is excessively low, temperature detector 11 transmits reverse signals.

Example 1

An apparatus as shown in Fig. 1 was constructed of the following components:
Compressor 1: Screw compressor, Model KS25B, made by Kobe Steel, Ltd.
Internal combustion engine 2: Diesel engine, Model S6A2-PTA, made by Mitsubishi Heavy Industries, Ltd.
Heat exchanger 4: Shell-and-tube heat exchanger (having a heat transfer area of 67 $m^2$) of the type that the exhaust gas passes through the tubes once.
The apparatus was run under the following conditions to produce a high-temperature, high-pressure gas from air:
Screw compressor, Model KS25B
Air intake: 40 $Nm^3$/min
Suction: atmospheric pressure, at 20°C
Discharge: 3.5 $kg/cm^2$G, at 230°C
Shaft power: 258 kW
Diesel engine, Model S6A2-PTA
Rated horsepower: 410 PS (at 1800 rpm)
320 PS (at 1300 rpm)
Adjustment of revolution: 1300-1800 rpm (infinitely variable)
Fuel: Fuel Oil A
Temperature of exhaust gas: 410°C
Flow rate of exhaust gas: 2080 kg/h
The temperature of the exhaust gas emerging from heat exchanger 4 was 320°C, and the temperature of the high-temperature, high-pressure air emerging from outlet pipe 6 was 300°C. The pressure of the high-temperature, high-pressure air was 3.5

$kg/cm^2$G, which is approximately equal to the outlet pressure of compressor 1.

It is noted that the temperature of the compressed air was raised from 230°C to 300°C as the result of heat exchange with the exhaust gas.

Using embodiments of the present invention, it is possible to produce a high-temperature, high-pressure gas economically and safely, because the compressor is driven by an internal combustion engine and the exhaust gas from the internal combustion engine is used to heat the compressed gas through heat exchange. Even in the case where a compressor having a low adiabatic efficiency is employed, it is possible to produce a high-temperature, high-pressure gas efficiently with less energy, because of the effective use of the surplus heat for the heating of the compressed gas and the recovery of heat from the high-temperature exhaust gas of the internal combustion engine to drive the compressor. The method of the invention is a simple and economical one which may be used to produce a high temperature, high-pressure gas at about 200-300°C and 2-5 $kg/cm^2$G. Furthermore, according to the present invention, it is possible to control the temperature of the high-temperature, high-pressure gas by adjusting the flow rate of the exhaust gas in response to the temperature at the outlet pipe or adjusting the flow rate of the compressed gas passing through the heat exchanger.

A further aspect of the present invention relates to the use of the method and/or apparatus to produce a high-temperature high-pressure gas such as air which is employed for stretching molten resin eg polyethylene or polypropylene emerging from a nozzle orifice, to disperse and stretch the resin into fibers, in the so-called melt blown process.

**Claims**

1. A method for producing a compressed gas at a high temperature, which comprises the steps of
   - driving a compressor by means of an internal combustion engine and
   - passing the gas discharged from said compressor in heat-exchange relationship with the exhaust gas from said internal combustion engine
   characterised in that the method further includes the steps of
   - measuring the temperature of the high-temperature, high pressure gas discharged from the heat exchanger,
   - producing a control signal on the basis of the measured temperature and
   - operating a flow control valve in dependence on said control signal to adjust the relative amount of the exhaust gas or of the compressed gas entering the heat exchanger such as to maintain said compressed gas at a predetermined temperature.

2. A method for producing a high-temperature, high-pressure gas as claimed in Claim 1, which further comprises diverting the flow of the exhaust gas from the internal combustion engine and controlling the amount of the diverted flow of the exhaust gas according to the monitored value of the temperature, whereby additional exhaust gas enters the heat exchanger when the measured temperature is too low and less exhaust gas enters the heat exchanger when the measured temperature is too high.

3. A method for producing a high-temperature, high pressure gas as claimed in Claim 1 or 2 which further comprises causing a portion of the gas discharged from the compressor to bypass the heat exchanger and join the flow of the high-temperature high-pressure gas discharged from the heat exchanger, measuring the temperature of the joined gas, and controlling the amount of the bypassing gas in response to the measured temperature to maintain the temperature of the joined gas at a predetermined level.

4. A method for producing a high-temperature, high-pressure gas as claimed in any one of the preceding claims, wherein the compression ratio of the or each stage of the compressor is from 3 to 6, the adiabatic efficiency of compression is lower than 80 % and the adiabatic constant k ($=C_p/C_v$) of the gas being compressed is greater than 1.3.

5. A method for producing a high-temperature, high-pressure gas as claimed in any one of the preceding claims, wherein the pressure of the high-temperature, high pressure gas is from 2 to 20 kg/cm$^2$G and/or the temperature of the high-temperature high-pressure gas is from 200 to 500° C.

6. A method for producing a high temperature, high pressure gas as claimed in any of the preceding claims characterised in that the gas is used in a melt-blown process for producing non-woven fabric by subjecting molten polymer resin such as polyethylene or polypropylene emerging from a nozzle orifice to a current of the high temperature, high pressure gas to disperse the resin and stretch it into fibers.

7. An apparatus for producing a high-temperature, high-pressure gas which comprises :
   (a) a compressor (1)
   (b) an internal combustion engine (2) adapted to drive the compressor
   (c) a heat exchanger (4)
   (d) an intermediate pipe (5) for conducting compressor gas discharged from the compressor into the heat exchanger.
   (e) outlet pipe means (6) for conducting high-pressure gas emerging from the heat exchanger, and
   (f) an exhaust pipe (7) for conducting the exhaust gas from the internal combustion engine into the heat exchanger
   (g) the heat exchanger including means for the exhaust gas and compressor gas to pass in heat exchange relationship whereby the exhaust gas heats the compressor gas
characterised in that there is provided
   - a means (11) for measuring the temperature of the gas discharged from the heat-exchanger (4)
   - a means for producing a control signal on the basis of the measured temperature; and
   - a flow control valve (9) operable in dependance on the control signal to adjust the relative amount of the exhaust gas or of the compressed gas entering the heat exchanger such as to maintain said compressor or gas at a predetermined temperature.

8. An apparatus for producing a high-temperature, high-pressure gas as claimed in Claim 7 wherein the compression ratio of the compressor is from 3 to 6 and the adiabatic efficiency is lower than 80 %.

9. An apparatus for producing a high-temperature, high-pressure gas as claimed in claims 7 or 8 wherein the compressor is a screw compressor.

10. An apparatus for producing a high-temperature, high-pressure gas as claimed in any one of the claims 6 to 8 wherein the internal combustion engine is a diesel engine having an exhaust gas temperature of from 300 to 500 ° C.

11. An apparatus for producing a high temperature, high pressure gas as claimed in any of claims 7 to 10 characterised in that the apparatus is used in a melt-blown process for producing non-woven fabric by subjecting the molten polymer resin such as polyethylene or polypropylene emerging from a nozzle orifice to a current of the high temperature, high pressure gas produced by the apparatus to disperse the resin and stretch it into fibres.

**Revendications**

1. Procédé de production d'un gaz comprimé à haute température, qui comprend les étapes consistant
   - à actionner un compresseur au moyen d'un moteur à combustion interne, et
   - à faire passer le gaz déchargé dudit compresseur en relation d'échange de chaleur avec le gaz d'échappement dudit moteur à combustion interne,

   caractérisé en ce qu'il comprend en outre les étapes consistant
   - à mesurer la température du gaz à haute température et sous haute pression déchargé de l'échangeur de chaleur,
   - à produire un signal de commande sur la base de la température mesurée, et
   - à faire fonctionner une soupape de régulation de débit en fonction dudit signal de commande pour l'ajustement de la quantité relative du gaz d'échappement ou du gaz comprimé pénétrant dans l'échangeur de chaleur de manière à maintenir ledit gaz comprimé à une température prédéterminée.

2. Procédé de production d'un gaz à haute température et sous haute pression suivant la revendication 1, qui consiste en outre à dévier l'écoulement du gaz d'échappement du moteur à combustion interne et à ajuster la quantité du courant dévié du gaz d'échappement en fonction de la valeur contrôlée de température, une quantité supplémentaire de gaz d'échappement pénétrant ainsi dans l'échangeur de chaleur lorsque la température mesurée est trop basse et une plus faible quantité de gaz d'échappement pénétrant dans l'échangeur de chaleur lorsque la température mesurée est trop élevée.

3. Procédé de production d'un gaz à haute température et sous haute pression suivant la revendication 1 ou 2, qui consiste en outre à amener une partie du gaz déchargé du compresseur à éviter l'échangeur de chaleur et à se joindre au courant du gaz à haute température et sous haute pression déchargé de l'échangeur de chaleur, à mesurer la température du gaz ajouté et à ajuster la quantité du gaz en dérivation en réponse à la température mesurée pour maintenir la température du gaz ajouté à une valeur prédéterminée.

4. Procédé de production d'un gaz à haute température et sous haute pression suivant l'un quelconque des revendications précédentes, dans lequel le taux de compression du, ou de chaque, étage du compresseur est compris dans l'intervalle de 3 à 6, le rendement adiabatique de compression est inférieur à 80% et la constante adiabatique K ($= C_p/C_v$) du gaz comprimé est supérieure à 1,3.

5. Procédé de production d'un gaz à haute température et sous haute pression suivant l'une quelconque des revendications précédentes, dans lequel la pression du gaz à haute température et sous haute pression est comprise dans l'intervalle de 2 à 20 kg/cm² au manomètre et/ou la température du gaz à haute température et sous haute pression est comprise dans l'intervalle de 200 à 500°C.

6. Procédé de production d'un gaz à haute température et sous haute pression suivant l'une quelconque des revendications précédentes, caractérisé en ce que le gaz est utilisé dans un procédé de soufflage de masse fondue pour la production d'une étoffe non tissée consistant à soumettre une résine polymérique fondue, telle qu'un polyéthylène ou un polypropylène quittant l'orifice d'une buse, à un courant du gaz à haute température et sous haute pression pour la dispersion de la résine et l'étirage de cette résine sous forme de fibres.

7. Appareil pour la production d'un gaz à haute température et sous haute pression, qui comprend :
   (a) un compresseur (1)
   (b) un moteur à combustion interne (2) apte à l'entraînement du compresseur
   (c) un échangeur de chaleur (4)
   (d) un conduit intermédiaire (5) destiné à véhiculer le gaz déchargé du compresseur dans l'échangeur de chaleur
   (e) un conduit de sortie (6) destiné à véhiculer le gaz sous haute pression quittant l'échangeur de chaleur, et
   (f) un conduit d'échappement (7) destiné à véhiculer le gaz d'échappement du moteur à combustion interne dans l'échangeur de chaleur
   (g) l'échangeur de chaleur comprenant des moyens pour le passage du gaz d'échappement et du gaz du compresseur en relation d'échange de chaleur, le gaz d'échappement chauffant ainsi le gaz du compresseur caractérisé on ce qu'il est fourni

- un moyen (11) pour la mesure de la température du gaz déchargé de l'échangeur de chaleur (4)
- un moyen pour engendrer un signal de commande sur la base de la température mesurée ; et
- une soupape de régulation d'écoulement (9) pouvant fonctionner en rapport avec le signal de commande pour l'ajustement de la quantité relative du gaz d'échappement ou du gaz comprimé pénétrant dans l'échangeur de chaleur de manière à maintenir ledit gaz comprimé à une température prédéterminée.

8. Appareil pour la production d'un gaz à haute température et sous haute pression suivant la revendication 7, dans lequel le taux de compression du compresseur est compris dans l'intervalle de 3 à 6 et le rendement adiabatique est inférieur à 80%.

9. Appareil pour la production d'un gaz à haute température et sous haute pression suivant la revendication 7 ou 8, dans lequel le compresseur est un compresseur à vis.

10. Appareil pour la production d'un gaz à haute température et sous haute pression suivant l'une quelconque des revendications 6 à 8, dans lequel le moteur à combustion interne est un moteur diesel dont la température du gaz d'échappement est comprise dans l'intervalle de 300 à 500° C.

11. Appareil pour la production d'un gaz à haute température et sous haute pression suivant l'une quelconque des revendications 7 à 10, caractérisé en ce qu'il est utilisé dans un procédé de soufflage de masse fondue pour la production d'une étoffe non tissée, consistant à soumettre la résine polymérique fondue, telle qu'un polyéthylène ou un polypropylène quittant l'orifice d'une buse, à un courant du gaz à haute température et sous haute pression produit par l'appareil pour la dispersion de la résine et l'étirage de cette résine sous forme de fibres.

## Patentansprüche

1. Verfahren zur Erzeugung eines komprimierten Gases bei einer hohen Temperatur, bei dem
    - ein Kompressor mittels eines Verbrennungsmotors angetrieben und
    - das aus dem Kompressor austretende Gas in wärmeaustauschender Wechselbeziehung mit dem Auspuffgas des Verbrennungsmotors geführt wird,
**dadurch gekennzeichnet,** daß außerdem
    - die Temperatur des aus dem Wärmetauscher austretenden Hochtemperatur-Hochdruckgases gemessen,
    - ein auf der gemessenen Temperatur basierendes Kontrollsignal erzeugt und
    - ein Durchflußkontrollventil in Abhängigkeit von dem Kontrollsignal betätigt wird, um die relative Menge des in den Wärmetauscher eintretenden Auspuffgases oder komprimierten Gases so einzustellen, daß das komprimierte Gas auf einer vorgegebenen Temperatur gehalten wird.

2. Verfahren zur Erzeugung eines Hochtemperatur-Hochdruckgases nach Anspruch 1, bei dem außerdem der Strom des Auspuffgases des Verbrennungsmotors aufgeteilt und die Menge des aufgeteilten Auspuffgasestroms gemäß dem aufgezeichneten Temperaturwert kontrolliert wird, wobei zusätzliches Auspuffgas in den Wärmetauscher eintritt, wenn die gemessene Temperatur zu niedrig ist, und weniger Auspuffgas in den Wärmetauscher eintritt, wenn die gemessene Temperatur zu hoch ist.

3. Verfahren zur Erzeugung eines Hochtemperatur-Hochdruckgases nach Anspruch 1 oder 2, bei dem außerdem ein Teil des aus dem Kompressor austretenden Gases dazu gebracht wird, an dem Wärmetauscher vorbeizuströmen und sich mit dem Strom des aus dem Wärmetauscher ausgetretenen Hochtemperatur-Hochdruckgases zu vereinigen, die Temperatur des vereinigten Gases gemessen und die Menge des vorbeistömenden Gases in Reaktion auf die gemessene Temperatur kontrolliert wird, um die Temperatur des vereinigten Gases auf einem vorgegebenen Niveau zu halten.

4. Verfahren zur Erzeugung eines Hochtemperatur-Hochdruckgases nach einem der vorhergehenden Ansprüche, bei dem das Verdichtungsverhältnis des oder jeder Stufe des Kompressors 3 bis 6 beträgt, der adiabatische Wirkungsgrad der Kompression kleiner als 80% ist und die adiabatische Konstante k- ($= c_p/c_v$) des komprimierten Gases größer als 1,3 ist.

5. Verfahren zur Erzeugung eines Hochtemperatur-Hochdruckgases nach einem der vorhergehenden Ansprüche, bei dem der Überdruck des Hochtemperatur-Hochdruckgases 2 bis 20 kg/cm$^2$ und/oder die Temperatur des Hochtemperatur-Hochdruckgases 200°C bis 500°C beträgt.

6. Verfahren zur Erzeugung eines Hochtemperatur-Hochdruckgases nach einem der vorhergehenden Ansprüche, **dadurch gekennzeichnet,** daß das Gas in einem Schmelz-Blas-Verfahren zur Herstellung von Vliesstoffen verwendet wird, indem aus einer Düsenöffnung austretendes geschmolzenes Polymerharz wie Polyethylen oder Polypropylen einem Strom des Hochtemperatur-Hochdruckgases ausgesetzt wird, um das Harz zu verteilen und zu Fasern zu strecken.

7. Vorrichtung zur Erzeugung eines Hochtemperatur-Hochdruckgases, die:
   (a) einen Kompressor (1)
   (b) einen Verbrennungsmotor (2), der daran angepaßt ist, den Kompressor zu betreiben,
   (c) einen Wärmetauscher (4)
   (d) eine Zwischenleitung (5) zum Leiten des aus dem Kompressor austretenden komprimierten Gases in den Wärmetauscher,
   (e) Auslaßleitungsmittel (6) zum Leiten des aus dem Wärmetauscher austretenden Hochdruckgases und
   (f) eine Auspuffleitung (7) zum Leiten des Auspuffgases des Verbrennungsmotors in den Wärmetauscher umfaßt,
   (g) wobei der Wärmetauscher Mittel zum Führen des Auspuffgases und des komprimierten Gases in wärmeaustauschender Wechselbeziehung einschließt und das Auspuffgas das komprimierte Gas erhitzt,
   **dadurch gekennzeichnet,** daß
   - Mittel (11) zum Messen der Temperatur des aus dem Wärmetauscher (4) austretenden Gases,
   - Mittel zur Erzeugung eines auf der gemessenen Temperatur basierenden Kontrollsignals und
   - ein Durchflußkontrollventil (9), das in Abhängigkeit von dem Kontrollsignal betätigbar ist, um die relativen Mengen des in den Wärmetauscher eintretenden Auspuffgases oder komprimierten Gases so einzustellen, daß das komprimierte Gas auf einer vorgegebenen Temperatur gehalten wird, vorhanden sind.

8. Vorrichtung zur Erzeugung eines Hochtemperatur-Hochdruckgases nach Anspruch 7, bei der das Verdichtungsverhältnis des Kompressors 3 bis 6 und der adiabatische Wirkungsgrad kleiner als 80% ist.

9. Vorrichtung zur Erzeugung eines Hochtemperatur-Hochdruckgases nach Anspruch 7 oder 8, in der der Kompressor ein Schneckenkompressor ist.

10. Vorrichtung zur Erzeugung eines Hochtemperatur-Hochdruckgases nach einem der Ansprüche 6 bis 8, in der der Verbrennungsmotor ein Dieselmotor mit einer Auspuffgastemperatur von 300 bis 500°C ist.

11. Vorrichtung zur Erzeugung eines Hochtemperatur-Hochdruckgases nach einem der Ansprüche 7 bis 10, **dadurch gekennzeichnet,** daß die Vorrichtung in einem Schmelz-Blas-Verfahren zur Herstellung von Vliesstoffen verwendet wird, indem das aus einer Düsenöffnung austretende geschmoizene Polymerharz wie Polyethylen oder Polypropylen einem Strom des von der Vorrichtung erzeugten Hochtemperatur-Hochdruckgases ausgesetzt wird, um das Harz zu verteilen und zu Fasern zu strecken.

Fig. 1

Fig. 2